(19) Europäisches Patentamt
European Patent Office
Office européen des brevets

(11) **EP 3 588 394 A1**

(12) **EUROPEAN PATENT APPLICATION**
published in accordance with Art. 153(4) EPC

(43) Date of publication:
01.01.2020 Bulletin 2020/01

(51) Int Cl.:
*G06N 99/00* (2019.01)　　*G06F 17/30* (2006.01)
*G06N 3/08* (2006.01)

(21) Application number: 18758434.7

(22) Date of filing: 09.02.2018

(86) International application number:
PCT/JP2018/004566

(87) International publication number:
WO 2018/155232 (30.08.2018 Gazette 2018/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 23.02.2017 JP 2017031807

(71) Applicant: Sony Corporation
Tokyo 108-0075 (JP)

(72) Inventor: YOSHIYAMA Kazuki
Tokyo 108-0075 (JP)

(74) Representative: MFG Patentanwälte
Meyer-Wildhagen Meggle-Freund
Gerhard PartG mbB
Amalienstraße 62
80799 München (DE)

(54) **INFORMATION PROCESSING APPARATUS, INFORMATION PROCESSING METHOD, AND PROGRAM**

(57)　The present technology relates to an information processing apparatus, an information processing method, and a program for enabling quantization with high accuracy.

Quantization is performed assuming that a distribution of values calculated by a machine learning operation is based on a predetermined probability distribution. The operation is an operation in deep learning, and the quantization is performed on the basis of a notion that a distribution of gradients calculated by the operation based on the deep learning is based on the predetermined probability distribution. The quantization is performed when a value obtained by learning in one apparatus is supplied to another apparatus in distributed learning in which machine learning is performed by a plurality of apparatuses in a distributed manner. The present technology can be applied to an apparatus that performs machine learning such as deep learning in a distributed manner.

*FIG. 11*

```
START QUANTIZATION PROCESSING
           │
CALCULATE MEAN AND VARIANCE         S31
           │
SET PROBABILITIES pl AND pg         S32
           │
SET VALUES ql AND qg                S33
           │
EXTRACT GRADIENT                    S34
           │
        RETURN
```

EP 3 588 394 A1

Printed by Jouve, 75001 PARIS (FR)

**Description**

TECHNICAL FIELD

The present technology relates to an information processing apparatus, an information processing method, and a program, and relates to, for example, an information processing apparatus, an information processing method, and a program suitably applied to a case where machine learning is performed by a plurality of apparatuses in a distributed manner.

BACKGROUND ART

In recent years, research in artificial intelligence has become active and various learning methods have been proposed. For example, a learning method called neural network, or the like has been proposed. In learning by neural network, the number of times of calculation is generally enormous, and thus processing with one apparatus tends to require long-time calculation. Therefore, it has been proposed to perform processing by a plurality of apparatuses in a distributed manner (see, for example, Patent Document 1).

CITATION LIST

PATENT DOCUMENT

Patent Document 1: Japanese Patent Application Laid-Open No. 05-108595

SUMMARY OF THE INVENTION

PROBLEMS TO BE SOLVED BY THE INVENTION

In the case of performing processing by a plurality of apparatuses in a distributed manner, a processing load on each apparatus can be reduced, and the time required for processing (calculation) can be shortened. In a case where the plurality of apparatuses that perform the processing is connected by a predetermined network, distributed processing is performed by supplying a result calculated by each apparatus to other apparatuses.

Since the size of a parameter that is the calculation result is large, the calculation result of a large amount of data needs to be transmitted and received between the apparatuses, and the time required for transmission and reception of data becomes long. In addition, if such time-consuming data transmission and reception is performed in each of the plurality of apparatuses, the entire system requires longer time.

In the case of performing processing by the plurality of apparatuses in a distributed manner, the time required for processing (calculation) can be shortened but the time required for transmission and reception of data becomes long, and as a result, the learning time itself cannot be shortened as desired. Therefore, it is desirable to shorten the learning time.

The present technology has been made in view foregoing, and enables shortening of the time required for transmission and reception of data between apparatuses at the time of distributed learning.

SOLUTIONS TO PROBLEMS

An information processing apparatus according to one aspect of the present technology performs quantization assuming that a distribution of values calculated by a machine learning operation is based on a predetermined probability distribution.

An information processing method according to one aspect of the present technology includes a step of performing quantization assuming that a distribution of values calculated by a machine learning operation is based on a predetermined probability distribution.

A program according to one aspect of the present technology causes a computer to execute processing including a step of performing quantization assuming that a distribution of values calculated by a machine learning operation is based on a predetermined probability distribution.

In the information processing apparatus, the information processing method, and the program according to one aspect of the present technology, quantization is performed assuming that a distribution of values calculated by a machine learning operation is based on a predetermined probability distribution.

Note that the information processing apparatus may be an independent apparatus or may be internal blocks configuring one apparatus.

Furthermore, the program can be provided by being transmitted via a transmission medium or by being recorded on a recording medium.

EFFECTS OF THE INVENTION

According to one aspect of the present technology, the time required for transmission and reception of data between apparatuses at the time of distributed learning can be shortened.

Note that effects described here are not necessarily limited, and any of effects described in the present disclosure may be exhibited.

BRIEF DESCRIPTION OF DRAWINGS

Fig. 1 is a diagram illustrating a configuration of an embodiment of a system to which the present technology is applied.
Fig. 2 is a diagram illustrating a configuration of another embodiment of the system to which the present technology is applied.
Fig. 3 is a diagram illustrating distributions of gradients.
Fig. 4 is a diagram illustrating examples of probability distributions.
Fig. 5 is a diagram illustrating an example of a normalized distribution.
Fig. 6 is a diagram illustrating a relationship between theoretical values and measurement values.
Fig. 7 is a diagram illustrating distributions of gradients.
Fig. 8 is a diagram illustrating a relationship between theoretical values and measurement values.
Fig. 9 is a diagram for describing probability distributions to be applied.
Fig. 10 is a flowchart for describing first processing of a worker.
Fig. 11 is a flowchart for describing processing related to quantization processing.

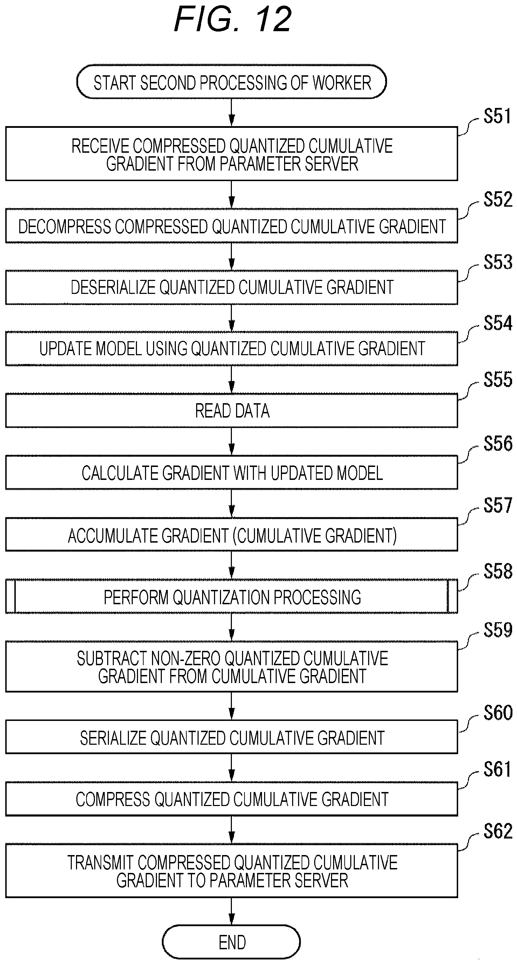

Fig. 12 is a flowchart for describing second processing of a worker.
Fig. 13 is a diagram for describing a recording medium.

MODE FOR CARRYING OUT THE INVENTION

Hereinafter, modes for implementing the present technology (hereinafter referred to as embodiments) will be described.

<System Configuration Example>

The present technology can be applied to distributed learning in machine learning. As the machine learning, the present technology can be applied to deep learning that is machine learning using a multilayered neural network. Here, although the case where the present technology is applied to deep learning will be described as an example, the present technology is applicable to other machine learning.

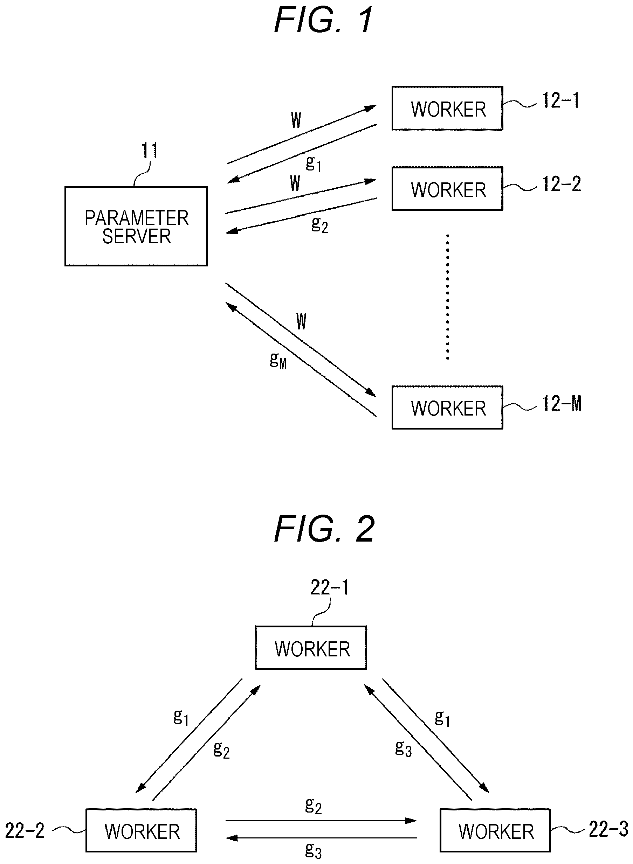

Fig. 1 is a diagram illustrating a configuration of an example of a system that performs distributed learning. The system illustrated in Fig. 1 includes a parameter server 11 and workers 12.

The parameter server 11 manages data for sharing parameter states and the like among the workers 12-1 to 12-M. Each of the workers 12-1 to 12-M is an apparatus including a graphics processing unit (GPU) and performs predetermined operations in distributed learning.

A parameter (variable) w is supplied from the parameter server 11 to the plurality of workers 12-1 to 12-M. Each of the workers 12-1 to 12-M updates an internal model on the basis of the supplied parameter w. Further, each of the workers 12-1 to 12-M receives training data and calculates a gradient g. The learning data is distributed and supplied to the workers 12-1 to 12-M.

For example, learning data D1 is distributed into M pieces of data $\{D_{11}, D_{12}, D_{13}, ..., D_M\}$, the learning data $D_{11}$ is supplied to the worker 12-1, the learning data $D_{12}$ is supplied to the worker 12-2, and the learning data $D_M$ is supplied to the worker 12-M.

The workers 12-1 to 12-M supply the calculated gradients g to the parameter server 11. For example, the worker 12-1 calculates a gradient g1 and supplies the gradient g1 to the parameter server 11, the worker 12-2 calculates a gradient g2 and supplies the gradient g2 to the parameter server 11, and the worker 12-M calculates a gradient gM and supplies the gradient gM to the parameter server 11.

The parameter server 11 receives the gradients g from the workers 12-1 to 12-M, calculates an average of the gradients g, and updates the parameter w on the basis of the mean. The parameter w updated in the parameter server 11 is supplied to each of the workers 12-1 to 12-M.

Such processing is repeated by the parameter server 11 and the workers 12-1 to 12-M to advance learning.

Fig. 2 is a diagram illustrating another configuration example of the system that performs distributed learning. The system illustrated in Fig. 2 is a system called peer to peer (P2P). In the system illustrated in Fig. 2, the parameter server 11 is not provided, and the system is configured by a plurality of workers 22.

In the system illustrated in Fig. 2, data is transmitted and received among workers 22-1 to 22-M. The worker 22-1 supplies a gradient g1 calculated by itself to the worker 22-2 and the worker 22-3. Similarly, the worker 22-2 supplies a gradient g2 calculated by itself to the worker 22-1 and the worker 22-3. Similarly, the worker 22-3 supplies a gradient g3 calculated by itself to the worker 22-1 and the worker 22-2.

Each worker 22 performs basically similar processing to the worker 12 illustrated in Fig. 1 and performs processing performed by the parameter server 11, thereby calculating the gradient and updating parameters.

The system to which the present technology is applied can be the system illustrated in Fig. 1 or 2. Furthermore, the present technology described below can be applied to systems other than the systems illustrated in Figs. 1 and 2. In the following description, the system illustrated in Fig. 1 will be described as an example.

In the system illustrated in Fig. 1, for example, the workers 12-1 to 12-M are connected to the parameter server 11 by a predetermined network. For example, the gradient g1 calculated by the worker 12-1 is supplied from the worker 12-1 to the parameter server 11 via the network.

The gradient g1 generally has a large parameter size. For example, assuming that the gradient g1 is represented by a $1000 \times 1000$ matrix, the gradient g1 will have one million parameters. For example, in a case where one parameter is transmitted and received with a predetermined number of data such as 4 bytes, the gradient g1 has $1,000,000 \times 4$ bytes. In a case of transmitting and receiving such an amount of data via the network, it takes time to transmit and receive the data even if a communication speed of the network is high.

Moreover, since the gradients g are supplied from the M workers 12 to the parameter server 11, it takes time for the parameter server 11 to receive the gradients g from all the workers 12.

The distributed learning shortens the processing time in each worker 12. However, there is a possibility that the distributed learning results in taking more processing time if the time required for transmission and reception of the gradient g becomes long.

Therefore, by reducing the data size of the gradient g transmitted and received between the worker 12 and the parameter server 11, the time required for transmission and reception of the gradient g is shortened. Specifically, to reduce the data size of the gradient g transmitted and received between the worker 12 and the parameter server 11, the gradient g supplied from the worker 12 to the parameter server 11 is quantized.

The quantization performed when a value obtained by learning in one apparatus is supplied to another apparatus in distributed learning in which such machine learning is performed by a plurality of apparatuses in a distributed manner will be described.

<Quantization>

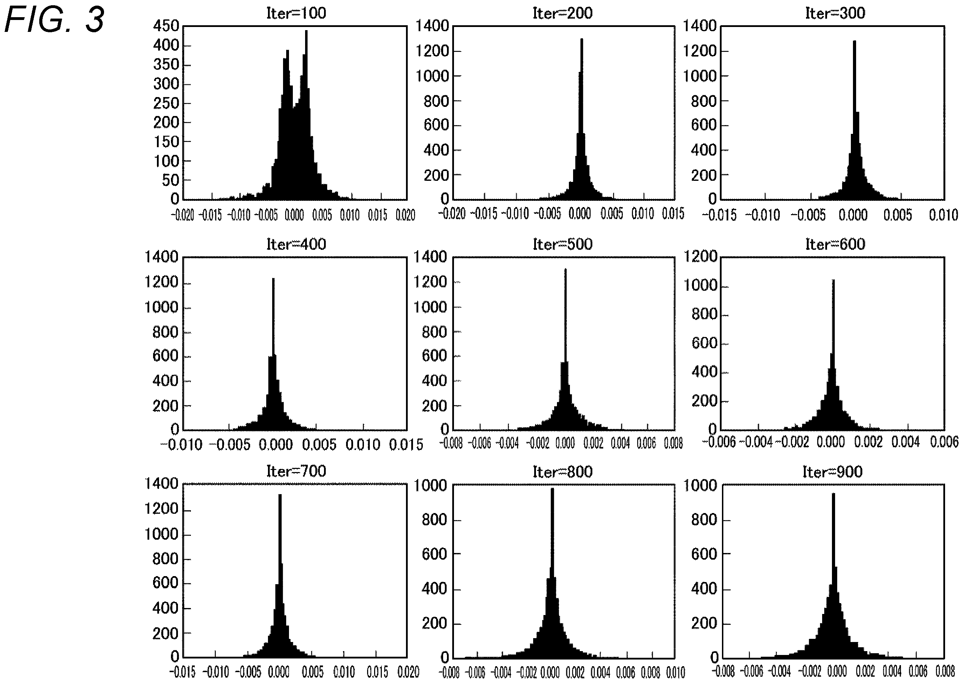

Fig. 3 is a graph summarizing results of the gradients g calculated in the worker 12. Each graph illustrated in Fig. 3 is a graph (cumulative distribution) illustrating a relationship between a value of each parameter and the number of the values of when the gradient g configured by 6400 parameters is calculated in the worker 12. In each graph illustrated in Fig. 3, the horizontal axis represents the value of the gradient g, and the vertical axis represents the cumulative number (density).

Furthermore, each graph illustrated in Fig. 3 illustrates results put together every 100 times of the operations in the worker 12, and for example, the graph of Iter = 100 (hereafter, described as graph 100 as appropriate and the other graphs are described in a similar manner) is a graph at the time when the operation in the worker 12 has been performed 100 times, the graph of Iter = 200 is a graph at the time when the operation in the worker 12 has been performed 200 times, and the graph of Iter = 900 is a graph at the time when the operation in the worker 12 has been performed 900 times.

It can be read that each of the graphs 200 to 900 has a substantially similar shape as the shape of the graph. Furthermore, the shape has one peak value (median value) and is substantially left-right symmetrical. Note that, in the processing of the worker 12 by which the graphs are obtained, the graphs illustrated in Fig. 3 are obtained. However, there is also a case where the graph 100 has one peak value and has a substantially left-right symmetrical shape, similarly to the other graphs.

Although not illustrated, results as illustrated in Fig. 3 are basically obtained in a case where another learning is performed by the worker 12. In other words, a left-right symmetrical graph with a peak value as a central axis is obtained (can be approximated) in a case where the gradient g calculated by the worker 12 is formed into a graph.

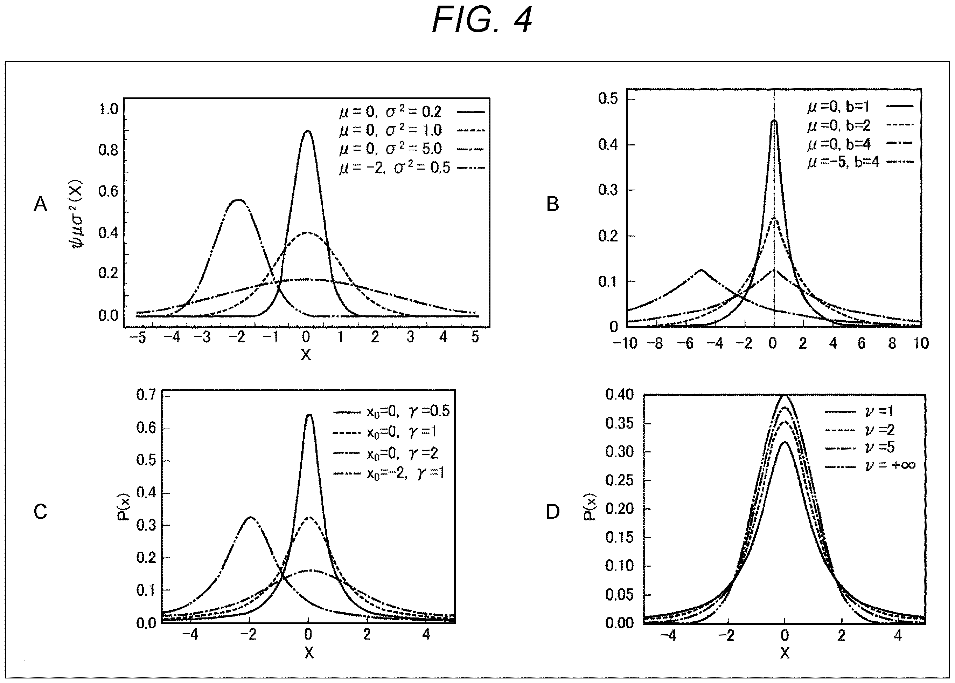

As such a left-right symmetrical graph, for example, a normal distribution as illustrated in A in Fig. 4, a Laplace distribution as illustrated in B in Fig. 4, Cauchy distribution as illustrated in C in Fig. 4, a student's t distribution as illustrated in D in Fig. 4, and the like.

Each of these distributions is a distribution having one peak value and from which a left-right symmetrical graph is obtained in a case where the peak value is set to the central axis. Each of these distributions is also a distribution from which one means (arithmetical mean) or one median can be calculated.

It can be read that the shapes are similar when comparing the shape of the probability distribution illustrated in Fig. 4 with the shape of the graph regarding the gradient g illustrated in Fig. 3.

Therefore, it is assumed that the gradient g is sampled from a left-right symmetrical probability distribution. Then, when quantizing the gradient g, quantization is performed by extracting a part of the gradient g corresponding to top p% of a predetermined probability distribution.

Specifically, a case where a probability distribution is a normal distribution in a case of assuming that the gradient g is sampled from the left-right symmetrical probability distribution will be described as an example.

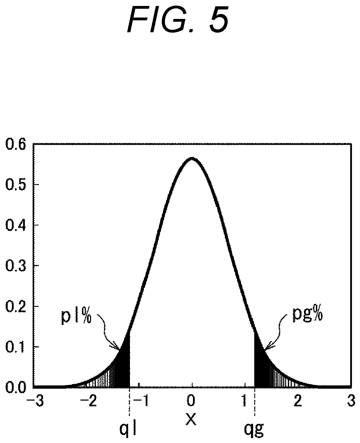

Fig. 5 is a graph of a normal distribution with a mean = 0 and a variance = 0.5. In Fig. 5, ql is a point (value of x) at which the probability is pl%, and qg is a point (value of x) at which the probability is pg%. The values ql and qg have the same absolute value. Assuming that the gradient g has a normal distribution illustrated in Fig. 5, quantization is performed by extracting a value with a gradient g equal to or less than the value ql and a value with a gradient g equal to or larger than the value qg.

That is, the quantization is performed on the basis of the following expression (1).

[Math. 1]

$$Q(x) = \begin{cases} q_g & \text{if } x > q_g \\ q_l & \text{if } x < q_l \\ 0 & \text{otherwise} \end{cases} \quad \cdots (1)$$

In a case where the gradient g (= x) is larger than the value qg, the gradient g is considered to be the value qg and is set as a transmission target. In a case where the gradient g (= x) is smaller than the value ql, the gradient g is considered to be the value ql and is set as a transmission target. In a case where the gradient g (= x) is equal to or smaller than the value qg and is equal to or larger than the value ql, the gradient g is considered to be 0 and excluded from a transmission target.

In such a case, (pl + pg)% of the gradient g is a transmission target. For example, in a case of performing 5% quantization, (pl + pg)% = 5%, and pl = 2.5 and pg = 2.5.

For example, in a case where the gradient g has one million parameters, the parameters are quantized to 5% of the one million parameters, in other words, to fifty-thousand parameters. Therefore, the amount of data to be sent from the worker 12 to the parameter server 11 can be reduced, and the time required for transmission and reception of the gradient g can be reduced. Thereby, the time in the distributed learning can be significantly shortened.

Referring back to Fig. 5, the normal distribution illustrated in Fig. 5 can be created if the mean and the variance are obtained. Furthermore, it is already known that the value ql at which the probability becomes pl% (the value qg at which the probability becomes pg%) can be uniquely obtained from pl (pg).

In quantization, first, the mean and variance (constants of the function of the assumed probability distribution) are determined from the calculated gradient g, and a graph of a normal distribution with respect to the gradient g is created (it is not necessary to actually create the graph but the graph is assumed to be created for convenience of description). Next, the probability pl and the probability pg are respectively set. As described above, the value ql and the value pg corresponding to the probability pl and the probability pg can be obtained if the probability pl and the probability pg are set.

After the value ql and the value pg are obtained, quantization is performed by extracting the gradient g to be a transmission target on the basis of the expression (1).

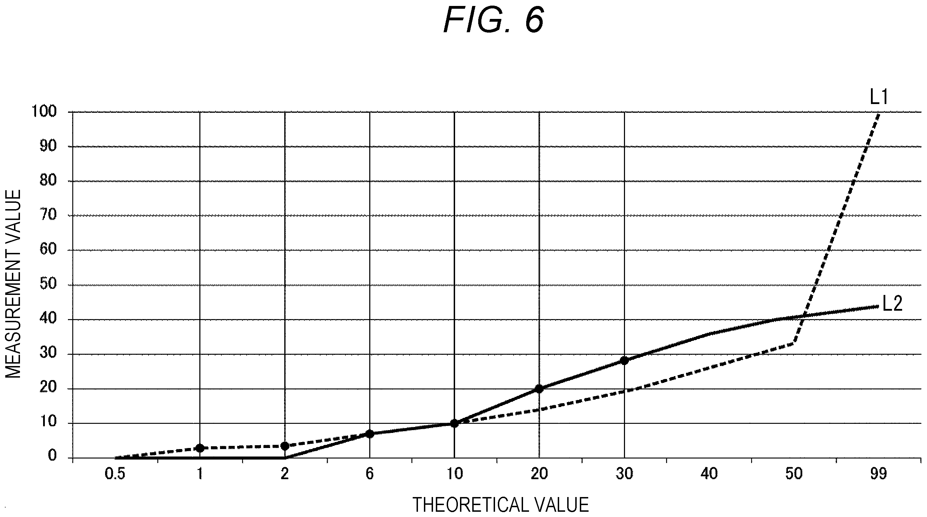

The accuracy of the quantization being maintained even in a case of performing quantization on the assumption that the distribution of the gradient g is based on such a predetermined probability distribution will be described with reference to Fig. 6. The horizontal axis of the graph illustrated in Fig. 6 represents a theoretical value of a quantization rate and the vertical axis represents an actually quantized rate (measurement value).

Note that the quantization rate is a value obtained by adding the probability pl and the probability pg described above, and is a value representing how much the parameter is reduced. For example, in the above example, description will be continued on the assumption that the quantization rate is 100% in a case where one million parameters are sent without quantization, and the quantization rate is 10% in a case where one million parameters are quantized and reduced to hundred-thousand parameters and sent.

The quantization rate may be set in consideration of a bandwidth of a network and the like. For example, when the bandwidth is wide and a relatively large amount of data can be set, the quantization rate may be set to a high value (and therefore, the amount of data is not reduced much), and when the bandwidth is narrow and only a relatively small amount of data can be sent, the quantization rate may be set to a low value (and therefore the amount of data is reduced).

By setting the quantization rate as described above, setting to enable communication band control and efficient transmission and reception of data becomes possible.

In the graph illustrated in Fig. 6, a graph L1 represents a graph in a case where the assumed predetermined probability distribution is a normalized distribution, and a graph L2 represents a graph in a case where the assumed predetermined probability distribution is a Laplace distribution.

For example, the graph illustrated in Fig. 6 is a diagram illustrating how much actually quantization has been performed when A% of quantization is set (pl + pg = A% is set) and the quantization has been performed. For example, referring to the graph L1, when 10% of quantization is set (pl + pg = 10% is set) assuming a normalized distribution, and the quantization has been processed, it can be read that actually approximately 10% of quantization has been performed. In this case, since the theoretical value and the actual value become substantially the same, the quantization with high accuracy can be proved.

Further, for example, referring to the graph L2, when 10% of quantization is set (pl + pg = 10% is set) assuming a Laplace distribution, and the quantization has been processed, it can be read that actually approximately 10% of quantization has been performed, and the quantization with high accuracy can be proved.

To reduce the amount of data of the gradient g to be transmitted from the worker 12 to the parameter server 11, it is better that the quantization is high (the value of the quantization rate is low). Making the quantization high corresponds to reducing the value (pl + pg) in the above description.

Taking this into consideration, in the graph illustrated in Fig. 6, it is found that the theoretical quantization rate and the actual quantization rate almost coincide with each other and the quantization with high accuracy can be performed at a smaller theoretical quantization rate (pl + pg).

In other words, in the graph illustrated in Fig. 6, it is found that the quantization can be performed without any problem in the quantization for reducing the amount of data of the gradient g to be transmitted from the worker 12 to the parameter server 11 even if the theoretical quantization rate and the actual quantization rate are far from each other at a larger theoretical quantization rate (pl + pg).

For example, referring to the result (graph L1) of the quantization assuming a normalized distribution as the predetermined probability distribution in the graph illustrated in Fig. 6, the quantization with high accuracy can be read if the theoretical quantization rate (pl + pg) falls within a range of about 1 to 30%.

Also, for example, referring to the result (graph L2) of the quantization assuming a Laplace distribution as the predetermined probability distribution in the graph illustrated in Fig. 6, the quantization with high accuracy can be read if the theoretical quantization rate (pl + pg) falls within the range of about 1 to 30%.

Therefore, according to the present technology, it has been proved that the quantization can be performed at a desired quantization rate with high accuracy within the range where the quantization is desired.

Furthermore, referring to Fig. 6, it is found that there is a possibility that the accuracy differs depending on the probability distribution applied (assumed) to quantization. Therefore, it is found that more accurate quantization can be performed using a probability distribution suitable for the gradient g to be handled.

<Case of Quantizing Sum of Gradients>

The graph in Fig. 6 illustrates a case of quantizing the gradient g itself. As another quantization, there is a case of quantizing a sum of gradients g.

Here, the gradient g calculated by the worker 12 at time t1 is a gradient gt1, the gradient g calculated by the worker 12 at time t2 is a gradient gt2, and the gradient g calculated by the worker 12 at time t3 is a gradient gt3.

In the case of quantizing the gradient g itself, the worker 12 quantizes the calculated gradient gt1 at the time t1, the worker 12 quantizes the calculated gradient gt2 at the time t2, and the worker 12 calculates the calculated gradient gt3 at the time t3. That is, in the case of quantizing the gradient g itself, the worker 12 performs the quantization only for the gradient g calculated at predetermined time.

In the case of quantizing the sum of the gradients g, the worker 12 quantizes the calculated gradient gt1 at the time t1 and holds the gradient gt1. At the time t2, the worker 12 adds the calculated gradient gt2 and the held gradient gt1, quantizes the added gradient (the gradient gt1 + the gradient gt2), and holds the quantized gradient (the gradient gt1 + the gradient gt2).

At the time t3, the worker 12 adds the calculated gradient gt3 to the held gradient (the gradient gt1 + the gradient gt2), quantizes the added gradient (the gradient gt1 + the gradient gt2 + the gradient gt3), and holds the quantized gradient (the gradient gt1 + the gradient gt2 + the gradient gt3). That is, in the case of quantizing the sum of the gradients g, the worker 12 performs the quantization for the gradient g calculated at predetermined time and the sum (described as a cumulative gradient) obtained by accumulating the gradients g calculated at time before the predetermined time, as targets.

Referring again to Fig. 6, as described above, it is found that there is a possibility that the accuracy differs depending on the probability distribution applied (assumed) to quantization. Comparing the graph L1 and the graph L2, the theoretical value relatively coincides with the implemented quantization rate up to about 30%, and for example, it can be read that the quantization can be performed at a desired (ideal) quantization rate within the range of 15 to 30%, in the graph L2, as compared with the graph L1.

Fig. 6 illustrates the case of quantizing the gradient g as is, and the graph L2 illustrates the case where a Laplace distribution is assumed as the function of the probability distribution. Therefore, in the case of quantizing the gradient g as is, it is found that the quantization can be performed with higher accuracy in a case of processing the quantization assuming a Laplace distribution as the function of the probability distribution than in a case of processing the quantization assuming a normalized distribution.

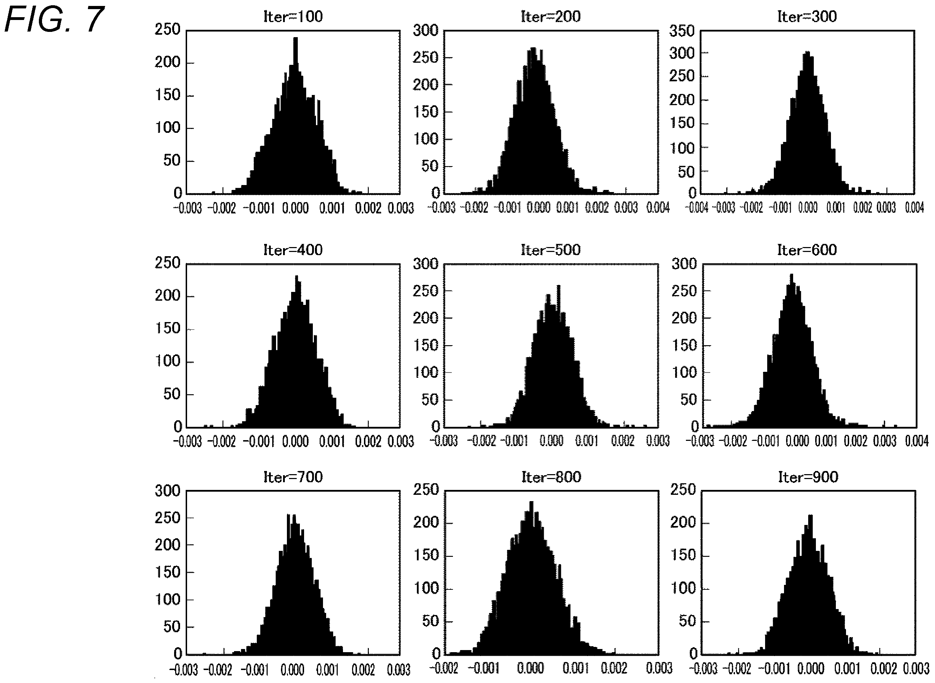

Meanwhile, in the case of quantizing the sum of the gradients g, a normalized distribution being more suitable than a Laplace distribution as the function of the probability distribution will be described. Fig. 7 illustrates graphs putting together results of the gradients g calculated in the worker 12 as in Fig. 3 but different from Fig. 3 in putting together the results of when the gradients g calculated in the worker 12 are cumulatively added.

Each graph illustrated in Fig. 7 is a graph illustrating a distribution of values obtained by calculating the gradient g configured by 6400 parameters and cumulatively adding the gradients g in the worker 12. In each graph illustrated in Fig. 7, the horizontal axis represents the value of the gradient g, and the vertical axis represents the cumulative number (density).

Furthermore, each graph illustrated in Fig. 7 illustrates results put together every 100 times of the operations in the worker 12, and for example, the graph of Iter = 100 (hereafter, described as graph 100 as appropriate and the other graphs are described in a similar manner) is a graph of when the gradients g of 100 times are cumulatively added at the time when the operation in the worker 12 has been performed 100 times.

Furthermore, similarly, the graph of Iter = 200 is a graph of when the gradients g are cumulatively added at the time when the operation in the worker 12 has been performed 200 times, and the graph of Iter = 900 is a graph of when the gradients g are cumulatively added at the time when the operation in the worker 12 has been performed 900 times.

It can be read that the graphs 100 to 900 have a substantially similar shape as the shapes of the graphs. Furthermore, each of the shapes has one peak value and is substantially left-right symmetrical about the peak value as a central axis. Such shapes of the graphs are similar to the graphs illustrated in Fig. 3. Therefore, as in the case described above, quantization can be performed assuming a probability distribution function.

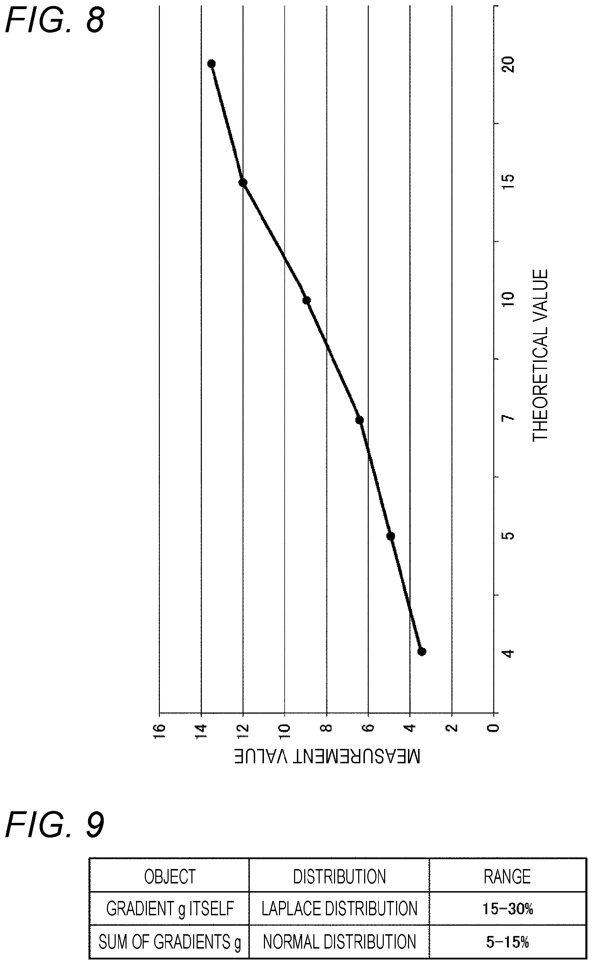

Accuracy in a case of quantizing a sum of the gradients g assuming a normalized distribution will be described with reference to Fig. 8. The horizontal axis of the graph illustrated in Fig. 8 represents a theoretical value of a quantization rate and the vertical axis represents a measurement value.

Fig. 8 illustrates results in a range of 4 to 20% as the theoretical values. From the graph in Fig. 8, it can be read that the quantization can be performed at the quantization rate relatively coinciding with the theoretical value when the quantization rate falls within a range of 5 to 15%, for example.

Such a matter is summarized in Fig. 9. In the case of quantizing the gradient g itself, a Laplace distribution is assumed as the probability distribution function, and the quantization is performed within the range of 15 to 30% as the quantization rate. Furthermore, in the case of quantizing the sum of the gradients g, a normalized distribution is assumed as the probability distribution function, and the quantization is performed within the range of 5 to 15% as the quantization rate.

Note that although the Laplace distribution and the normalized distribution have been described as examples in the above description, these distributions are only examples, and quantization can be performed assuming other probability distributions. Furthermore, the Laplace distribution and the normalized distribution have been described as suitable quantization in the above description. However, the Laplace distribution and the normalized distribution are not necessarily optimal depending on the learning content and the way of variance (for example, depending on whether learning is performed by the system illustrated in Fig. 1, by the system illustrated in Fig. 2, or the like), and a probability distribution function suitable for the learning content, the way of variance, and the like are appropriately assumed.

Furthermore, quantization may be performed assuming a plurality of probability distributions, instead of performing quantization assuming one probability distribution. For example, the assumed probability distribution may be switched according to a desired quantization rate. In this case, for example, the assumed probability distribution may be differentiated according to a desired quantization rate in such a manner that quantization is performed assuming a probability distribution A at the quantization rate of 5 to 15%, quantization is performed assuming a probability distribution B at the quantization rate of 15 to 30%, and quantization is performed assuming a probability distribution C at the quantization rate of 30 to 50%.

Furthermore, for example, a learning stage may be divided into an initial stage, a middle stage, and a late stage, and quantization may be performed assuming different probability distributions at the respective stages. For example, as illustrated in Figs. 3 and 7, the shape of the graph regarding the distribution of the gradient g changes little by little as learning progresses, in other words, as the number of times of calculation of the gradient g increases. Therefore, different probability distributions may be assumed according to the learning stage in accordance with such change in shape, and quantization may be performed.

Furthermore, in the above-described embodiment, the case of using the function of the probability distribution such as the normalized distribution or the Laplace distribution as is has been described as an example. However, the probability distribution function may be deformed and the quantization as described above may be performed using the deformed function, instead of using the function as is.

For example, in the case of performing quantization assuming a Laplace distribution, quantization may be performed after calculating a natural logarithm of the gradient and obtaining a linear region, and determining what % of values is to be used. Since the present technology performs quantization assuming a probability distribution, quantization using a function obtained by applying some processing to a probability distribution function also falls within the scope of the present technology.

<First Processing of Worker>

Processing (referred to as first processing) of the worker 12 that performs the above-described quantization will be described.

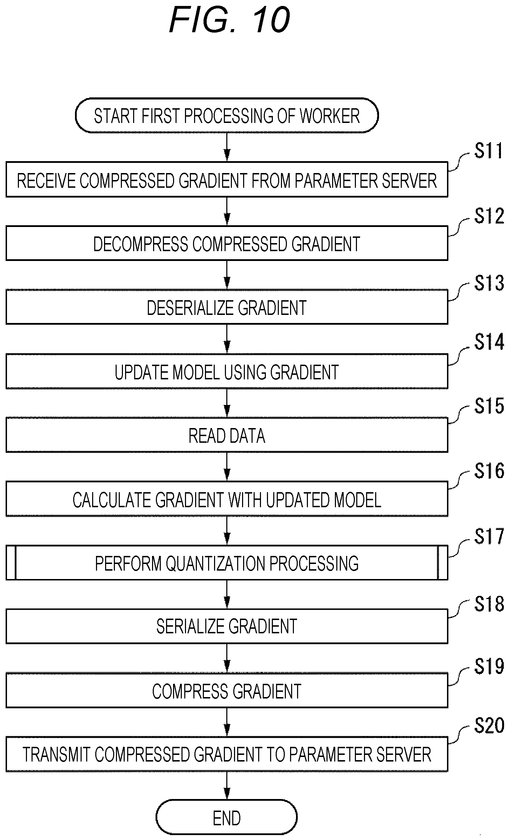

Fig. 10 is a flowchart for describing the processing performed by the worker 12. Furthermore, in Fig. 10, the case of quantizing the gradient g itself will be described.

In step S11, the worker 12 receives a compressed parameter (gradient g) from the parameter server 11. Note that the worker 12 receives the parameter from the parameter server 11 in the case of the configuration illustrated in Fig. 1, and the worker 12 receives the parameter (gradient g) from another worker 12 in the case of the configuration illustrated in Fig. 2.

In step S12, the worker 12 decompresses the compressed gradient g. In step S13, the worker 12 deserializes the decompressed gradient g. Moreover, in step S14, the worker 12 updates its own internal model using the deserialized gradient g.

In step S15, the worker 12 reads learning data. The learning data may be supplied from another apparatus or may be held by the worker 12 in advance. Further, the supplied timing may not be after the update of the internal model and may be another timing. In step S16, the worker 12 calculates the gradient g from the updated model and the read learning data.

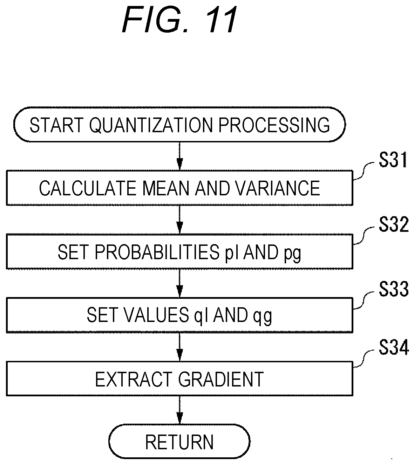

In step S17, quantization processing is performed. The quantization processing performed in step S17 will be described with reference to the flowchart in Fig. 11.

In step S31, the mean and the variance of the assumed probability distribution function are calculated from the gradient g. For example, in a case where the assumed probability distribution is a normalized distribution, the mean and the variance are calculated from the calculated gradient g. Furthermore, for example, in a case where the assumed probability distribution is a Laplace distribution, an expected value and the variance (constants in the function of the Laplace distribution) are calculated from the calculated gradient g.

When the processing in step S31 is executed, the processing includes processing of setting the type of the probability distribution function assumed at the time of quantization, for example, the type such as a normalized distribution or a Laplace distribution, and the mean and variance (depending on the type of the probability distribution function) regarding the set probability distribution function are calculated.

In addition, as described above, in a case of switching the assumed probability distribution, or the like under a predetermined condition, the assumed probability distribution is set, and an operation based on the set probability distribution is performed.

In step S32, the probability pl and the probability pg are set. The probability pl and the probability pg are values indicating the ratio of quantization as described above. One of the probability pl and the probability pg can be set if the other is set in the 0 process in the mean. In other words, for example, the probability pg can be calculated by (1-pl) if the probability pl is set, so either one of the probability pl and the probability pg may be set and the other may be calculated.

Furthermore, the probability pl and the probability pg may be fixed values or variable values. In the case of the fixed values, in step S32, the set probability pl and probability pg are always used. In the case of the variable values, the probability pl and the probability pg are set (updated) each time the processing in step S32 is performed or every time the processing in step S32 is performed a plurality of times.

In the case of updating the probability pl and the probability pg, the probability pl and the probability pg are updated such that a difference between the theoretical value and the actual measurement value becomes zero, for example. In a case of performing such update, the update can be performed by a learning-based technique or an experience-based technique.

In the case of updating the probability pl and the probability pg by a learning-based method, first, the number of quantized parameters that are theoretically not 0 is obtained from the theoretical value p. The number of quantized

parameters is p $\times$ N' = N, where the number of parameters is N. The actual number of parameters is M of Q(g) $\neq$ 0, where the quantization function is Q(g) and the gradient is g.

As the learning is in progress, data of

{(N1, M1), ..., (Nt, Mt), ..., (NT, MT)}

is accumulated, and a function f of M = f(n) can be obtained on a learning basis by using the accumulated data.

With regard to a theoretical value p in a specific range, a function f learned in advance can be used because the relationship between the theoretical value and the measurement value becomes substantially the same using any deep learning architecture.

In the case of updating the probability pl and the probability pg by an experience-based technique, first, data of

{(N1, M1), ..., (Nt, Mt), ..., (NT, MT)}

is accumulated as in the above-described learning-based technique. If such data are accumulated, the mean of deviation error between the theoretical value and the measurement value is obtained by the following expression (2).

[Math. 2]

$$Mean = \frac{\dfrac{\sum_i N_i - M_i}{T}}{N'} \qquad \cdots \quad (2)$$

The probability pl and the probability pg are corrected by adding the theoretical value p to the obtained mean.

The probability pl and the probability pg may be updated on the basis of such a technique.

Furthermore, in the case of updating the probability pl and the probability pg, the probability pl and the probability pg may be updated according to the number of times of calculation of the gradient g, regardless of the above-described technique. For example, at the initial stage of learning, larger values may be set to the probability pl and the probability pg, and smaller values may be set as the learning is in progress.

Returning to the description of the flowchart in Fig. 11, if the probability pl and the probability pg are set in step S32, the processing proceeds to step S33. In step S33, the values ql and qg corresponding to the set probability pl and probability pg are set. The value ql and the value qg are used as threshold values for extracting the gradient g, as described with reference to Fig. 5 and the expression (1).

In step S34, the calculated gradient g is compared with the value ql and the value qg on the basis of the expression (1), and the gradient g to be transmitted to the parameter server 11 is extracted. A gradient g smaller than the value ql and a gradient g larger than the value qg are extracted on the basis of the expression (1).

If the quantization processing is executed in this manner, the processing proceeds to step S18. In step S18, the quantized gradient g is serialized. Then, the serialized gradient g is compressed in step S19. Then, in step S20, the compressed gradient g is transmitted to the parameter server 11 (other workers 12 depending on the system).

The data to be transmitted is data including at least an index representing the position of the gradient g extracted by the quantization, and information indicating which of the value ql or the value qg data is classified into. The information indicating which of the value ql or the value qg data is classified may be the value ql or the value qg itself or may be information of a sign (positive or negative information) indicating which of the value ql or the value qg data is classified, for example.

For example, in the case of using a sign, the value ql or the value qg itself may be sent to the parameter server 11, and then the index and the sign may be sent. Furthermore, the means and variance calculated from the gradient g may be transmitted to the parameter server 11 and the parameter server 11 may calculate the value ql and the value qg, and the worker 12 may transmit the index and the sign, instead of transmitting the value ql or the value qg itself.

What data to transmit when transmitting the quantized gradient g to the parameter server 11 or another worker 12 can be appropriately set according to a system specification or the like.

By transmitting the quantized gradient g in this manner, the amount of data at the time of transmission can be reduced and the time required for transmission and reception of the gradient g can be shortened. For example, in a case of transmitting n gradients g without quantization, the amount of data becomes n $\times$ B (bits), where one parameter of the gradient g is transmitted by B (bits).

In contrast, the amount of data becomes n $\times$ (pl + pg) $\times$ B (bits) by quantization. Since (pl + pg) is a value of 1 or less, for example, 0.1 (= 10%), n $\times$ (pl + pg) $\times$ B (bits) < n $\times$ B (bits) holds. Therefore, the amount of data to be transmitted can be significantly reduced by quantization.

Furthermore, as described above, by performing quantization assuming that the gradient g follows the probability distribution function, quantization that reduces the amount of data with high accuracy can be performed. For example, conventionally, there have been a stochastic quantization technique and a deterministic quantization technique.

In the case of the stochastic quantization technique, it has been proposed to perform quantization by generating a random number and extracting a gradient g corresponding to the random number. However, in this case, the cost for generating random numbers occurs, and it is difficult to determine how much the parameters can be reduced without reducing the accuracy, and there are possibilities that the quantization cannot be favorably performed, and the amount of data cannot be reduced and the time required for transmission and reception of the gradient g cannot be shortened.

Furthermore, in the case of the deterministic quantization technique, it has been proposed to perform quantization by setting a deterministic threshold value and extracting a gradient g equal to or larger than or equal to or smaller than the threshold value. In this case, since the gradients g need to be sorted and compared with the threshold value, it takes time to sort the huge amount of gradients g. Moreover, it is difficult to appropriately set the threshold value so as not to reduce the accuracy.

In contrast, according to the present technology, the theoretical value and the measurement value substantially coincide and a significant amount of data can be reduced with high accuracy even in the quantization to reduce the gradient g up to 10%, as described with reference to Fig. 6, for example.

<Second Processing of Worker>

Another processing (referred to as second processing) of the worker 12 that performs the above-described quantization will be described. As the second processing of the worker, the case of quantizing the sum of the gradients g (hereinafter referred to as cumulative gradient g) will be described. Note that the basic processing is similar to the processing described with reference to the flowcharts of Figs. 10 and 11, and thus description of the similar processing is omitted as appropriate.

In step S51, the worker 12 receives a compressed parameter (cumulative gradient g) from the parameter server 11. Note that the worker 12 receives the parameter from the parameter server 11 in the case of the configuration illustrated in Fig. 1, and the worker 12 receives the parameter (cumulative gradient g) from another worker 12 in the case of the configuration illustrated in Fig. 2.

In step S52, the worker 12 decompresses the compressed cumulative gradient g. In step S53, the worker 12 deserializes the decompressed cumulative gradient g. Moreover, in step S54, the worker 12 updates its own internal model using the deserialized cumulative gradient g.

In step S55, the worker 12 reads the learning data. In step S56, a new gradient g is calculated from the updated model and the read learning data.

In step S57, a newly calculated gradient g is added to the cumulative gradient g. In a case of performing an operation using the cumulative gradient g, such processing of accumulating gradients is performed.

In step S58, quantization processing is performed. The quantization processing in step S58 is performed on the basis of step S17 in the first processing of the worker illustrated in Fig. 10, that is, the flowchart in Fig. 11. Therefore, description is omitted. However, in each processing in the flowchart illustrated in Fig. 11, processing performed for the gradient g is different in performing the processing for the cumulative gradient g.

If the quantization processing is executed in step S58, the processing proceeds to step S59. In step S59, an error feedback is performed by subtracting a non-zero quantized cumulative gradient g from the cumulative gradient g. After the error feedback, in step S60, the quantized cumulative gradient g is serialized.

The serialized cumulative gradient g is compressed in step S61. Then, in step S62, the compressed cumulative gradient g is transmitted to the parameter server 11 (or another worker 12 depending on the system).

The data to be transmitted is data including at least an index representing the position of the cumulative gradient g extracted by the quantization, and information indicating which of the value ql or the value qg data is classified into, as in the case of quantizing the gradient g itself.

By transmitting the quantized cumulative gradient g in this manner, the amount of data at the time of transmission can be reduced and the time required for transmission and reception of the cumulative gradient g can be shortened. That is, the theoretical value and the measurement value substantially coincide and a significant amount of data can be reduced with high accuracy even in the quantization to reduce the cumulative gradient g up to 10%, as described with reference to Fig. 8, for example.

As described above, according to the present technology, quantization can be performed efficiently and accurately. Furthermore, the present technology can shorten the learning time by being applied to when performing distributed learning by machine learning.

The machine learning can be applied to learning to which deep learning is applied, for example, and according to the present technology, the time required for transmission and reception of the gradient can be shortened when performing distributed learning. Therefore, the time required for learning can be shortened.

<Recording Medium>

The above-described series of processing can be executed by hardware or software. In the case of executing the series of processing by software, a program that configures the software is installed in a computer. Here, the computer includes a computer incorporated in dedicated hardware, and a general-purpose personal computer and the like capable of executing various functions by installing various programs, for example.

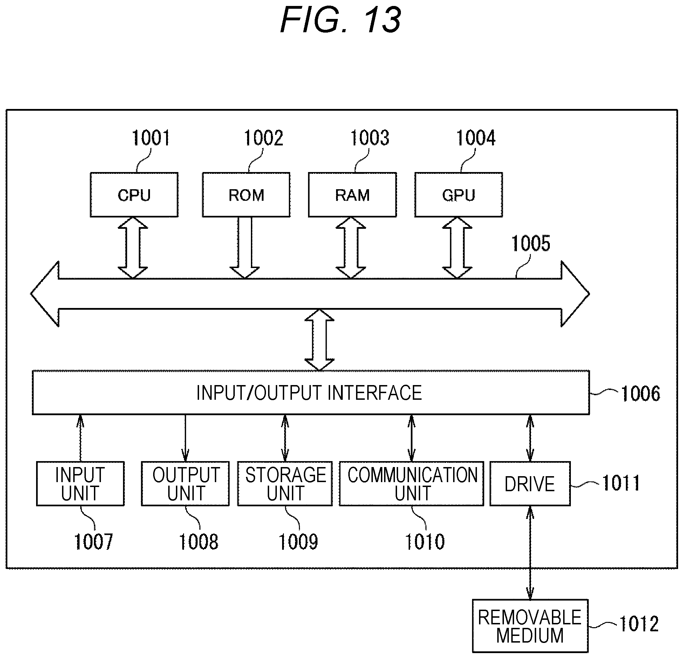

Fig. 13 is a block diagram illustrating a configuration example of hardware of a computer that executes the above-described series of processing by a program. In a computer, a central processing unit (CPU) 1001, a read only memory (ROM) 1002, a random access memory (RAM) 1003, a graphics processing unit (GPU) 1004 are mutually connected by a bus 1005. Moreover, an input/output interface 1006 is connected to the bus 1005. An input unit 1007, an output unit 1008, a storage unit 1009, a communication unit 1010, and a drive 1011 are connected to the input/output interface 1006.

The input unit 1007 includes a keyboard, a mouse, a microphone, and the like. The output unit 1008 includes a display, a speaker, and the like. The storage unit 1009 includes a hard disk, a nonvolatile memory, and the like. The communication unit 1010 includes a network interface, and the like. The drive 1011 drives a removable medium 1012 such as a magnetic disk, an optical disk, a magneto-optical disk, or a semiconductor memory.

In the computer configured as described above, the CPU 1001 or the GPU 1004 loads, for example, a program stored in the storage unit 1009 into the RAM 1003 and executes the program via the input/output interface 1006 and the bus 1005, whereby the above-described series of processing is performed.

The program to be executed by the computer (the CPU 1001 or the GPU 1004) can be recorded on the removable medium 1012 as a package medium and the like, for example, and provided. Furthermore, the program can be provided via a wired or wireless transmission medium such as a local area network, the Internet, or digital satellite broadcast.

In the computer, the removable medium 1012 is attached to the drive 1011, whereby the program can be installed in the storage unit 1009 via the input/output interface 1006. Furthermore, the program can be received by the communication unit 1010 via a wired or wireless transmission medium and installed in the storage unit 1009. Other than the above method, the program can be installed in the ROM 1002 or the storage unit 1009 in advance.

Note that the program executed by the computer may be a program processed in chronological order according to the order described in the present specification or may be a program executed in parallel or at necessary timing such as when a call is made.

Furthermore, in the present specification, the system refers to an entire apparatus configured by a plurality of apparatuses.

Note that the effects described in the present specification are merely illustrative and are not restrictive, and other effects may be exhibited.

Note that embodiments of the present technology are not limited to the above-described embodiments, and various modifications can be made without departing from the gist of the present technology.

Note that the present technology can also have the following configurations.

(1) An information processing apparatus that
performs quantization assuming that a distribution of values calculated by a machine learning operation is based on a predetermined probability distribution.
(2) The information processing apparatus according to (1),
in which the operation is an operation in deep learning, and the quantization is performed on a basis of a notion that a distribution of gradients calculated by the operation based on the deep learning is based on the predetermined probability distribution.
(3) The information processing apparatus according to (1) or (2),
in which the quantization is performed when a value obtained by learning in one apparatus is supplied to another apparatus in distributed learning in which machine learning is performed by a plurality of apparatuses in a distributed manner.
(4) The information processing apparatus according to any one of (1) to (3),
in which the predetermined probability distribution is a distribution that forms a left-right symmetrical graph with a peak value as a central axis.
(5) The information processing apparatus according to any one of (1) to (3),
in which the predetermined probability distribution is a distribution for which one mean or one median is calculable.
(6) The information processing apparatus according to any one of (1) to (3),
in which the predetermined probability distribution is any one of a normalized distribution, a Laplace distribution, a Cauchy distribution, and a Student-T distribution.
(7) The information processing apparatus according to any one of (1) to (6),
in which a constant of a function of the predetermined probability distribution is obtained from the calculated values.
(8) The information processing apparatus according to any one of (1) to (7),
in which a ratio of quantization is set, a value in the predetermined probability distribution, the value corresponding to the ratio, is set as a threshold value, and a value equal to or larger than the threshold value or equal to or smaller than the threshold value of the calculated values is extracted.

(9) The information processing apparatus according to any one of (2) to (8), in which the quantization is performed for the gradient itself as a quantization target or for a cumulative gradient obtained by cumulatively adding the gradients as a quantization target.

(10) An information processing method including a step of performing quantization assuming that a distribution of values calculated by a machine learning operation is based on a predetermined probability distribution.

(11) A program for causing a computer to execute processing including a step of performing quantization assuming that a distribution of values calculated by a machine learning operation is based on a predetermined probability distribution.

REFERENCE SIGNS LIST

11    Parameter server
12    Worker
22    Worker

**Claims**

1. An information processing apparatus that performs quantization assuming that a distribution of values calculated by a machine learning operation is based on a predetermined probability distribution.

2. The information processing apparatus according to claim 1, wherein the operation is an operation in deep learning, and the quantization is performed on a basis of a notion that a distribution of gradients calculated by the operation based on the deep learning is based on the predetermined probability distribution.

3. The information processing apparatus according to claim 1, wherein the quantization is performed when a value obtained by learning in one apparatus is supplied to another apparatus in distributed learning in which machine learning is performed by a plurality of apparatuses in a distributed manner.

4. The information processing apparatus according to claim 1, wherein the predetermined probability distribution is a distribution that forms a left-right symmetrical graph with a peak value as a central axis.

5. The information processing apparatus according to claim 1, wherein the predetermined probability distribution is a distribution for which one mean or one median is calculable.

6. The information processing apparatus according to claim 1, wherein the predetermined probability distribution is any one of a normalized distribution, a Laplace distribution, a Cauchy distribution, and a Student-T distribution.

7. The information processing apparatus according to claim 1, wherein a constant of a function of the predetermined probability distribution is obtained from the calculated values.

8. The information processing apparatus according to claim 1, wherein a ratio of quantization is set, a value in the predetermined probability distribution, the value corresponding to the ratio, is set as a threshold value, and a value equal to or larger than the threshold value or equal to or smaller than the threshold value of the calculated values is extracted.

9. The information processing apparatus according to claim 2, wherein the quantization is performed for the gradient itself as a quantization target or for a cumulative gradient obtained by cumulatively adding the gradients as a quantization target.

10. An information processing method comprising
a step of performing quantization assuming that a distribution of values calculated by a machine learning operation is based on a predetermined probability distribution.

11. A program for causing a computer to execute processing including
a step of performing quantization assuming that a distribution of values calculated by a machine learning operation is based on a predetermined probability distribution.

## FIG. 1

## FIG. 2

FIG. 3

EP 3 588 394 A1

*FIG. 4*

EP 3 588 394 A1

# FIG. 5

FIG. 6

EP 3 588 394 A1

FIG. 7

EP 3 588 394 A1

## FIG. 8

Axis labels: THEORETICAL VALUE (horizontal), MEASUREMENT VALUE (vertical)

## FIG. 9

| OBJECT | DISTRIBUTION | RANGE |
|---|---|---|
| GRADIENT g ITSELF | LAPLACE DISTRIBUTION | 15-30% |
| SUM OF GRADIENTS g | NORMAL DISTRIBUTION | 5-15% |

# FIG. 10

```
      ( START FIRST PROCESSING OF WORKER )
                       │
                       ▼
  RECEIVE COMPRESSED GRADIENT FROM PARAMETER SERVER        S11
                       │
                       ▼
        DECOMPRESS COMPRESSED GRADIENT                     S12
                       │
                       ▼
            DESERIALIZE GRADIENT                           S13
                       │
                       ▼
         UPDATE MODEL USING GRADIENT                       S14
                       │
                       ▼
                READ DATA                                  S15
                       │
                       ▼
      CALCULATE GRADIENT WITH UPDATED MODEL                S16
                       │
                       ▼
        PERFORM QUANTIZATION PROCESSING                    S17
                       │
                       ▼
             SERIALIZE GRADIENT                            S18
                       │
                       ▼
             COMPRESS GRADIENT                             S19
                       │
                       ▼
  TRANSMIT COMPRESSED GRADIENT TO PARAMETER SERVER         S20
                       │
                       ▼
                    ( END )
```

# FIG. 11

START QUANTIZATION PROCESSING

CALCULATE MEAN AND VARIANCE — S31

SET PROBABILITIES pl AND pg — S32

SET VALUES ql AND qg — S33

EXTRACT GRADIENT — S34

RETURN

# FIG. 12

START SECOND PROCESSING OF WORKER

S51

RECEIVE COMPRESSED QUANTIZED CUMULATIVE
GRADIENT FROM PARAMETER SERVER

S52

DECOMPRESS COMPRESSED QUANTIZED CUMULATIVE GRADIENT

S53

DESERIALIZE QUANTIZED CUMULATIVE GRADIENT

S54

UPDATE MODEL USING QUANTIZED CUMULATIVE GRADIENT

S55

READ DATA

S56

CALCULATE GRADIENT WITH UPDATED MODEL

S57

ACCUMULATE GRADIENT (CUMULATIVE GRADIENT)

S58

PERFORM QUANTIZATION PROCESSING

S59

SUBTRACT NON-ZERO QUANTIZED CUMULATIVE
GRADIENT FROM CUMULATIVE GRADIENT

S60

SERIALIZE QUANTIZED CUMULATIVE GRADIENT

S61

COMPRESS QUANTIZED CUMULATIVE GRADIENT

S62

TRANSMIT COMPRESSED QUANTIZED CUMULATIVE
GRADIENT TO PARAMETER SERVER

END

# FIG. 13

INPUT/OUTPUT INTERFACE ~1006

INPUT UNIT 1007

OUTPUT UNIT 1008

STORAGE UNIT 1009

COMMUNICATION UNIT 1010

DRIVE ~1011

REMOVABLE MEDIUM ~1012

## INTERNATIONAL SEARCH REPORT

| | International application No. |
|---|---|
| | PCT/JP2018/004566 |

### A. CLASSIFICATION OF SUBJECT MATTER
Int.Cl. G06N99/00(2010.01)i, G06F17/30(2006.01)i, G06N3/08(2006.01)i

According to International Patent Classification (IPC) or to both national classification and IPC

### B. FIELDS SEARCHED

Minimum documentation searched (classification system followed by classification symbols)
Int.Cl. G06N99/00, G06F17/30, G06N3/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2016-29568 A (THE UNIVERSITY OF ELECTRO-COMMUNICATIONS) 03 March 2016, paragraphs [0027]-[0031], fig. 3 (Family: none) | 1, 10-11<br>2-7, 9<br>8 |
| Y | 久保陽太郎，ニューラルネットワークによる音声認識の進展，人工知能，01 March 2016, vol. 31, no. 2, pp. 180-188, ISSN:2188-2266, (JUBO, Yotaro, "Speech Recognition with Deep Neural Net : After Its First Introduction", journal of the Japanese Society for Artificial Intelligence) | 2-3, 9 |

☒ Further documents are listed in the continuation of Box C.　　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 20 April 2018 (20.04.2018) | 01 May 2018 (01.05.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2018/004566 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | 武田龍、他2名，量子化 Deep Neural Network のための有界重みモデルに基づく音響モデル学習，第46回 AI チャレンジ研究会予稿集 (SIG-Challenge) [online], 09 November 2016 [search date 20 April 2018], internet: <URL:http://www.osaka-kyoiku.ac.jp/~challeng/SIG-Challenge-046/SIG-Challenge-046-02.pdf>, pp. 2-11, (TAKEDA, Ryu et al., "Acoustic Model Training based on Weight Boundary Model for Discrete Deep Neural Networks", Proceedings of the 46th Meeting of Special Interest Group on AI Challenges (SIG-Challenge)) | 4-7 |
| A | JP 6-176000 A (HITACHI, LTD.) 24 June 1994 (Family: none) | 1-11 |
| A | 神谷龍司、他5名，Binarized-DCNN による識別計算の高速化とモデル圧縮，電子情報通信学会技術研究報告， 08 December 2016, vol. 116, no. 366, pp. 47-52, (IEICE technical report), non-official translation (KAMIYA, Ryuji et al., "Speed-up of identification calculation by Binarized-DCNN, and model compression") | 1-11 |
| A | JP 2005-234706 A (DENSO CORP.) 02 September 2005 (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5108595 A